# EUROPEAN PATENT APPLICATION

(11) **EP 3 438 594 A1**
(43) Date of publication of application: **06.02.2019**
(21) Application number: 17775306.8
(22) Date of filing: 29.03.2017
(51) Int. Cl.: F28F 1/32, C23C 26/00, F25B 39/02, F28F 13/18, F28F 19/06, F28F 21/08, G01N 21/67

(54) **HYDROPHILIC COATING, HEAT EXCHANGER FIN USING SAME, AND HEAT EXCHANGER**

(30) Priority: 30.03.2016 JP 2016068986
(71) Applicant: UACJ Corporation, Tokyo 100-0004 (JP)
(72) Inventor: SHIOMI, Kohei, Tokyo 100-0004 (JP); FUJIMURA, Ryoko, Tokyo 1000004 (JP); NINOMIYA, Junji, Tokyo 100-0004 (JP); UEDA, Kaoru, Tokyo 100-0004 (JP); OGIHARA, Kana, Tokyo 100-0004 (JP)
(74) Representative: Barker Brettell LLP
(86) International application number: PCT/JP2017/013062
(87) International publication number: WO 2017/170772

(57) **Abstract**

A hydrophilic film of the present disclosure contains at least Si, Al, and F. The emission intensity ratio Si/Al of Si to Al is 7.0×10⁻³ to 3.0×10⁻¹ and the peak emission intensity ratio Si/F of Si to F is 2.0×10⁻³ to 4.0×10⁻², according to glow discharge optical emission spectrometry in the thickness direction of a hydrophilic film 32.

## Description

### CROSS-REFERENCE TO RELATED APPLICATION

This international application claims the benefit of Japanese Patent Application No. 2016-068986 filed on March 30, 2016 with the Japan Patent Office, and the entire disclosure of Japanese Patent Application No. 2016-068986 is incorporated herein by reference.

### TECHNICAL FIELD

The present disclosure relates to a hydrophilic film, and a heat exchanger fin and a heat exchanger using the hydrophilic film.

### BACKGROUND ART

For example, a heat exchanger for air conditioning used in an air conditioner or the like includes a tube having one or more flow passages formed therein through which a coolant flows and a fin joined to the tube. The heat exchanger is configured so that heat exchange between the coolant flowing through the flow passage in the tube and the outside air is performed via fins.

In the heat exchanger, when the fins are cooled by the coolant flowing through the flow passages in the tubes, condensed water may be generated on the surfaces of the fins. The condensed water generated on the surfaces of the fins inhibits the flow of the outside air in gaps between the respective fins, resulting in a reduction in heat transfer performance of the heat exchanger. Therefore, it is desirable to use a hydrophilic fin in order to ensure the drainage of the surfaces of the fins in the heat exchanger.

For example, Patent Document 1 discloses a heat exchanger including a hydrophilic fin in which a coating film containing a silicate as a main component is precoated on a surface of an aluminum base material. Further, Patent Document 2 discloses a heat exchanger including a hydrophilic fin in which a composite plating film comprises eutectoid of aluminum and inorganic fine particles is formed on a surface of an aluminum base material.

### PRIOR ART DOCUMENTS

### PATENT DOCUMENTS

Patent Document 1: Japanese Unexamined Patent Application Publication No. 2013-137153
Patent Document 2: Japanese Unexamined Patent Application Publication No. 2014-43639

### SUMMARY OF THE INVENTION

### PROBLEMS TO BE SOLVED BY THE INVENTION

However, in Patent Documents 1 and 2, the fin having the coating film or the composite plating film is provided on the surface of the heat exchanger. There is still room for improvement in hydrophilicity of the fin, and further improvement of the hydrophilicity of the fin and sustainability thereof is desired.

According to one aspect of the present disclosure, it is desirable to provide a hydrophilic film excellent in hydrophilicity and sustainability thereof, and a heat exchanger fin and a heat exchanger using the hydrophilic film.

### MEANS FOR SOLVING THE PROBLEMS

A hydrophilic film according to one aspect of the present disclosure contains at least Si, Al, and F. The emission intensity ratio Si/Al of Si to Al is 7.0×10⁻³ to 3.0×10⁻¹ and the peak emission intensity ratio Si/F of Si to F is 2.0×10⁻³ to 4.0×10⁻², according to glow discharge optical emission spectrometry in the thickness direction of the hydrophilic film.

The hydrophilic film has an emission intensity ratio and a peak emission intensity ratio of the above-mentioned specific element, which fall within the specified ranges, according to glow discharge optical emission spectrometry in the thickness direction of the hydrophilic film. Therefore, it exhibits excellent hydrophilicity and excellent sustainability of hydrophilicity. Accordingly, the application of the hydrophilic film to, for example, a heat exchanger fin, can improve the drainage of the condensed water generated on the surface of the heat exchanger fin, can suppress the ventilation resistance, and, as a result, can improve the heat transfer performance.

In the hydrophilic film, the hydrophilic film has an amount of coating per unit area of preferably 0.5 to 10 g/m². In this case, it is possible to improve the brazability between a member having the hydrophilic film on its surface and an aluminum member. For example, it is possible to improve the brazability between a heat exchanger fin having the hydrophilic film on its surface and an aluminum heat exchanger tube.

A heat exchanger fin according to another aspect of the present disclosure includes an aluminum base material made of aluminum or an aluminum alloy and the hydrophilic film formed on a surface of the aluminum base material.

The heat exchanger fin has the hydrophilic film having hydrophilicity and excellent sustainability of excellent hydrophilicity. Therefore, it is possible to improve the drainage of condensed water generated on a surface of an exchange fin, to suppress the ventilation resistance, and as a result, to improve the heat transfer performance. Accordingly, if the heat exchanger fin is applied to the heat exchanger, the heat exchange performance of the heat exchanger can be improved.

A heat exchanger according to still another aspect of the present disclosure includes a flow pipe in which at least one flow passage is formed and at least one heat exchanger fin that is joined to the flow pipe.

The heat exchanger includes the heat exchanger fin including the hydrophilic film having hydrophilicity and excellent sustainability of excellent hydrophilicity. Therefore, the heat exchange performance can be improved.

### BRIEF DESCRIPTION OF THE DRAWINGS

FIG. 1 is a perspective view showing a configuration of a heat exchanger.
FIG. 2 is a cross-sectional explanatory view taken along line II-II of FIG. 1.
FIG. 3 is a perspective view showing a configuration of a heat exchanger core part.
FIG. 4 is a cross-sectional explanatory view taken along line IV-IV of FIG. 3.
FIG. 5 is a graph showing an example of results of glow discharge optical emission spectrometry in the thickness direction of a hydrophilic film.

### EXPLANATION OF REFERENCE NUMERALS

1...heat exchanger, 2...tube (flow pipe), 3...fin, 21...flow passage, 31...aluminum base material, 32...hydrophilic film

### MODE FOR CARRYING OUT THE INVENTION

Hereinafter, an embodiment of the present disclosure will be described. The present disclosure is not limited to the following embodiment and, of course, can be implemented in various modes without departing from the gist of the present disclosure.

As described above, the hydrophilic film contains at least Si, Al, and F. The hydrophilic film can be composed of, for example, a reaction product of Si alone or a Si compound and a fluoride-based flux containing Al. The reaction product is obtained by reacting Si alone or a Si compound with a fluoride-based flux containing Al, for example, by heating.

As the Si compound, for example, water glass and colloidal silica of lithium silicate, sodium silicate, and the like can be used.

As the fluoride-based flux containing Al, for example, KAIF4, K3AIF6, AlF₃, Li₃AlF₆, and CsAlF₄ can be used.

As described above, the hydrophilic film has an emission intensity ratio Si/Al of Si to Al of 7.0×10⁻³ to 3.0×10⁻¹ and a peak emission intensity ratio Si/F of Si to F of 2.0×10⁻³ to 4.0×10⁻², according to glow discharge optical emission spectrometry (GD-OES) in the thickness direction of the hydrophilic film. The glow discharge optical emission spectrometry can be carried out according to JIS K 0144 (2001).

When the emission intensity ratio Si/Al is less than 7.0×10⁻³ or exceeds 3.0×10⁻¹, the sustainability of hydrophilicity in the hydrophilic film decreases. In addition, when the peak emission intensity ratio Si/F is less than 2.0×10⁻³ or exceeds 4.0×10⁻², the sustainability of hydrophilicity in the hydrophilic film is reduced.

Preferably, the emission intensity ratio Si/Al be 1.0×10⁻² to 2.3×10⁻¹. Further, it is preferable that the peak emission intensity ratio Si/F be 3.0×10⁻³ to 3.1×10⁻². In these cases, it is possible to further improve the hydrophilicity of the hydrophilic film and the sustainability of hydrophilicity.

The emission intensity ratio Si/Al and the peak emission intensity ratio Si/F can be obtained from the results of glow discharge optical emission spectrometry in the thickness direction of the hydrophilic film. The method of obtaining the emission intensity ratio Si/Al and the peak emission intensity ratio Si/F will be described in detail in the Examples below.

As described above, the amount of coating per unit area of the hydrophilic film is preferably 0.5 to 10 g/m². The amount of coating per unit area can be obtained from the formula: ((dry weights of base material after formation of hydrophilic film and hydrophilic film)-(weight of base material before formation of hydrophilic film))/(hydrophilic film formation area on base material), when a target material on which the hydrophilic film is formed is a base material.

When the amount of coating per unit area of the hydrophilic film is less than 0.5 g/m², the function of the fluoride-based flux contained in the hydrophilic film may not be sufficiently obtained, thereby reducing the brazability between the member having the hydrophilic film on its surface (for example, heat exchanger fin having a hydrophilic film on its surface) and the aluminum member (for example, heat exchanger tube made of aluminum). When the amount of coating per unit area of the hydrophilic film exceeds 10 g/m², a gap (clearance) due to the hydrophilic film may be formed between the member having the hydrophilic film on its surface and the aluminum member (more specifically, for example, between the base material on which the hydrophilic film is formed and the aluminum member), thereby reducing the brazability. The aluminum member is a member made of, for example, aluminum or an aluminum alloy.

More preferably, the hydrophilic film has an amount of coating per unit area of 1.1 to 4.0 g/m². In this case, it is possible to further improve the brazability between the member having the hydrophilic film on its surface and the aluminum member.

As described above, the heat exchanger fin includes an aluminum base material made of aluminum or an aluminum alloy and a hydrophilic film formed on a surface of the aluminum base material. Examples of the aluminum alloy used in the aluminum base material include pure aluminum such as 1100, 1050, and 1N30; Al-Cu-based alloys such as 2017 alloy and 2024 alloy; Al-Mn-based alloys such as 3003 alloy and 3004 alloy; Al-Mg-based alloys such as 5052 alloy and 5083 alloy; and Al-Mg-Si-based alloys such as 6061 alloy, of Japanese Industrial Standards (JIS).

In the heat exchanger fin, an undercoat treatment layer of a chemical conversion film may be formed on a surface of the aluminum base material on which the hydrophilic film is formed. The components of the undercoat treatment layer, for example, Cr, Zr, Zn, Ti, etc., have little influence on the hydrophilicity of the hydrophilic film and the sustainability thereof.

As described above, the heat exchanger includes at least one flow pipe having at least one flow passage formed therein through which a coolant or the like flows, and at least one fin (heat exchanger fin) joined to the flow pipe. For example, aluminum or an aluminum alloy can be used as the material constituting the flow pipe, similarly to the aluminum base material of the heat exchanger fin.

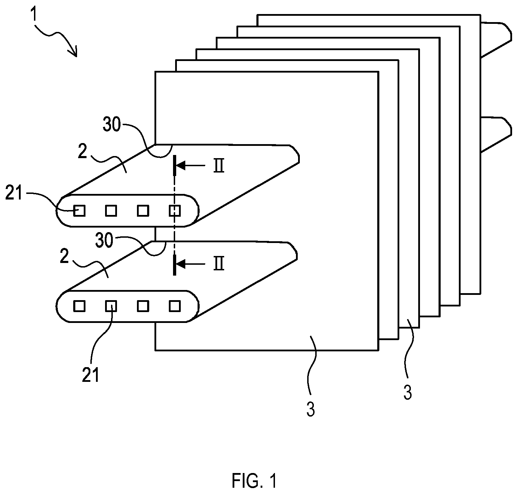

An embodiment of the heat exchanger will be described with reference to FIG. 1.

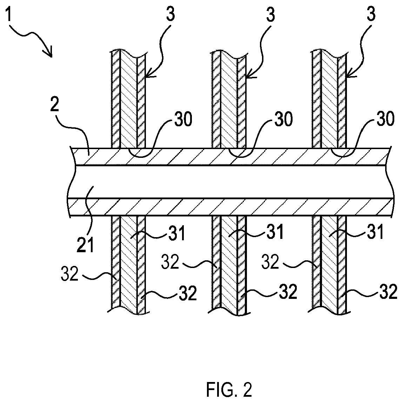

As shown in FIGS. 1 and 2, a heat exchanger 1 for air conditioning includes at least one tube (flow pipe) 2 and at least one fin 3. The heat exchanger 1 of the present embodiment includes a plurality of tubes 2 and a plurality of fins 3. Hereinafter, one of the plurality of tubes 2 and one of the plurality of fins 3 will be described.

The tube 2 is made of an aluminum alloy. The tube 2 has a flat cross section orthogonal to the axial direction, and is formed of a pipe having a plurality of flow passages 21 formed therein through which a coolant flows. The tube 2 has a brazing filler layer (not shown) on its outer surface.

Each of the fins 3 is formed in a plate shape. The fin 3 includes an aluminum base material 31 made of an aluminum alloy and a hydrophilic film 32 formed on a surface of the aluminum base material 31. In each of the fins 3, a concave cutout portion 30 is formed.

The plurality of fins 3 are each arranged at intervals in the thickness direction of the fins 3. The tube 2 is fitted into each of a plurality of notches 30 arranged in a line. The tube 2 and each of the fins 3 are joined via a brazing filler (brazing filler layer on the outer surface of the tube 2). That is, the tube 2 and each of the fins 3 are joined by brazing.

### [Examples]

Hereinafter, the Examples of the present disclosure will be described with reference to Tables 1 and 2 while being compared with the Comparative Examples. The following Examples show examples of the present disclosure, and the present disclosure is not limited thereto at all.

In the Examples, a plurality of heat exchanger fins having a hydrophilic film on their surface and a plurality of heat exchanger core parts using the fins (Examples A1 to A16 and B1 to B4, and Comparative Examples A17 to A26, B5, and B6) were prepared to evaluate the initial hydrophilicity, sustainability of hydrophilicity, and brazability.

### <Formation of Hydrophilic Film and Preparation of Heat Exchanger Core Part>

A film mainly composed of a silicate was formed on a surface of a plate-shaped fin (aluminum base material) with a composition of A1050 of JIS having an undercoat treatment layer of phosphoric acid chromate. The film mainly composed of a silicate is a film composed of LiO₂·nSiO₂ (n=3.2 to 3.8). The fin was press-molded to prepare a corrugated fin. Thereafter, a fluoride-based flux containing Al was applied to a surface of the fin. As the fluoride-based flux, KAlF₄ was used.

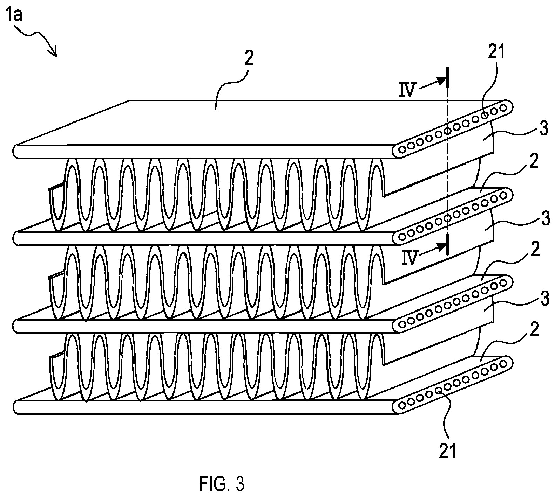

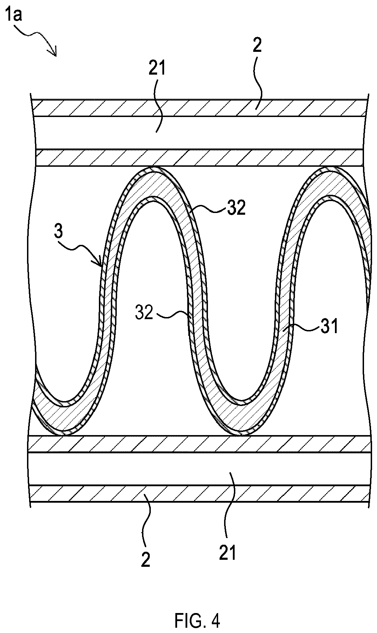

Next, as shown in FIGS. 3 and 4, the precoated corrugated fin 3 was held between the tubes (flow pipes) 2 composed of a 3000 series aluminum alloy pipe having a brazing filler layer (not shown) on its surface. At this time, the corrugated fin 3 was held between the tubes 2 in a state in which the tubes 2 were opposite to each other, that is, in a state in which the brazing filler layers formed on the surfaces of the tubes 2 were opposite to each other, so that the brazing filler layers on the surfaces of the tubes 2 and the apex portions of mountain portions of the corrugated fin 3 were brought into contact with each other. The brazing filler layer was formed by applying a brazing filler made of Si powder to the surface of the tube 2. The tube is a flow pipe having a flat cross section orthogonal to the axial direction and having a plurality of flow passages formed therein through which a coolant flows.

The plurality of tubes 2 and the plurality of fins 3 were heated to a maximum reaching temperature of 600°C, and brazing heating was performed in an inert atmosphere. Thus, a heat exchanger core part 1a composed of the plurality of tubes 2 and the plurality of fins 3 each having the hydrophilic film 32 formed on the surface of an aluminum base material 31 was prepared.

### <Glow Discharge Optical Emission Spectrometry>

A sample for measurement having a width of 30 mm and a length of 40 mm was cut out from the fin in the prepared heat exchanger core part. Glow discharge optical emission spectrometry in the thickness direction of the fin (hydrophilic film) was performed using a glow discharge optical emission spectrometric device. From the results of glow discharge optical emission spectrometry, the emission intensity ratio Si/Al and the peak emission intensity ratio Si/F were obtained.

As the glow discharge optical emission spectrometric device, GDA750 manufactured by SPECTRUMA was used. Conditions for glow discharge optical emission spectrometry using the glow discharge optical emission spectrometric device were as follows: after replacement at a neon gas pressure of 20.0 hPa, output: 30 W; frequency: 13.6 MHz; Al detection wavelength at an anode diameter of 2.5 mmϕ: 396.152 nm; Si detection wavelength: 288.157 nm; F detection wavelength: 238.204 nm; and Cr detection wavelength: 267.716 nm.

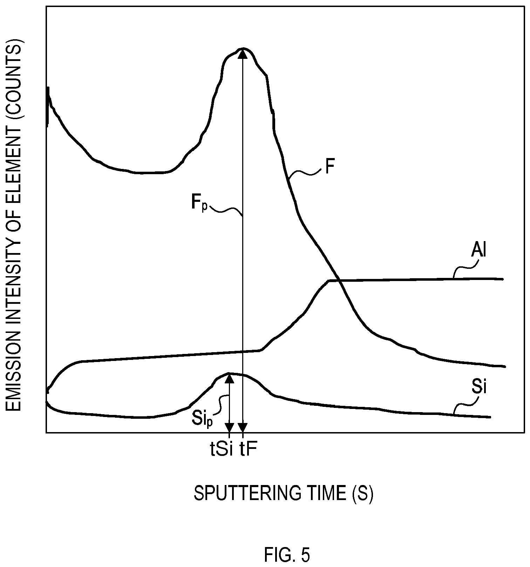

Here, FIG. 5 shows an example of the results of glow discharge optical emission spectrometry in the thickness direction of the hydrophilic film. In FIG. 5, the vertical axis represents emission intensity of each element (counts), and the horizontal axis represents sputtering time (s). Here, the "counts" represents the total number of emissions counted every 25 ms.

The emission intensity ratio Si/Al is obtained by integrating each of the emission intensities of Al and Si contained in the hydrophilic film and calculating a ratio of the integrated emission intensity value of Si to that of Al. At this time, the sputtering time from 0 (s) to tF (s) shown in FIG. 5 was defined as the time for the hydrophilic film, and the emission intensities of Al and Si contained in the hydrophilic film were each integrated.

The peak emission intensity ratio Si/F is obtained by calculating a ratio Siₚ/Fₚ of the peak emission intensity Siₚ of Si to the peak emission intensity Fₚ of F as shown in FIG. 5. Here, the peak emission intensity Fₚ of F is an emission intensity at the peak determined as the peak of the emission intensity when the emission intensity difference within 5 seconds before and after the sputtering time tF (s) at a specific emission intensity of F is 7.0×10⁻¹ or more. The peak emission intensity Siₚ of Si is an emission intensity at the peak determined as the peak of the emission intensity when the emission intensity difference within 5 seconds before and after the sputtering time tSi (s) at a specific emission intensity of Si is 3.0×10⁻³ or more.

### <Amount of Coating Per Unit Area>

The weight of the aluminum base material before formation of a hydrophilic film was measured with an electronic balance. Subsequently, a hydrophilic film was formed on a surface of the aluminum base material, and the dry weights of the aluminum base material and hydrophilic film were measured. Then, the amount of coating per unit area of the hydrophilic film (simply described as "amount of coating" in Table 2) was obtained by dividing the increment in weight before and after formation of the hydrophilic film by the hydrophilic film formation area on the aluminum base material. Each of the measurement values was rounded off to the first decimal place.

### <Initial Hydrophilicity>

A plate-shaped test plate having the same configuration as that of the fin in the prepared heat exchanger core part was provided. Then, the contact angle was measured with respect to the test plate. Specifically, a water droplet of 2 µl was dropped onto the test plate at a room temperature to measure the contact angle of the water droplet after 30 seconds. The contact angle was measured using FACE automatic contact angle meter CA-Z manufactured by Kyowa Interface Science Co., Ltd.

The hydrophilicity was evaluated as follows: the case where the contact angle between the hydrophilic film and the water droplet was 10°C or less was ranked as "⊙⊙", the case where the contact angle was more than 10° and 20° or less was ranked as "⊙", the case where the contact angle was more than 20° and 30° or less was ranked as "○", and the case where the contact angle exceeded 30° was ranked as "×". The case where the evaluation result was "⊙⊙", "⊙", or "○" was determined as pass. The case where the evaluation result was "×" was determined as fail.

### <Sustainability of Hydrophilicity>

The above-mentioned test plate was immersed in pure water for 2 minutes and air-dried for 6 minutes. This cycle of immersion in pure water and air drying was repeated 300 times. Thereafter, the contact angle between the hydrophilic film and the water droplet was measured in a manner similar to that in the evaluation of the hydrophilicity described above.

The sustainability of hydrophilicity was evaluated as follows: the case where the contact angle between the hydrophilic film and the water droplet after 300 cycles was 10° or less was ranked as "⊙⊙", the case where the contact angle was more than 10° and 20° or less was ranked as "⊙", the case where the contact angle was more than 20° and 30° or less was ranked as "○", and the case where the contact angle exceeded 30° was ranked as "×". The case where the evaluation result was "⊙⊙", "⊙", or "○" was determined as pass. The case where the evaluation result was "×" was determined as fail.

### <Brazability>

A brazed joint part between the tube and the corrugated fin in the prepared heat exchanger core part was cut along the plane (main surface) of the tube with a cutter knife. Then, the sum (L1) of the joint lengths at the mountain portions of the corrugated fin to the tube and the sum (L2) of the lengths at the mountain portions of the corrugated fin brought into contact with the tube were measured, and L1 was divided by L2. The obtained value was expressed in percentage (L1/L2×100) and defined as the joining rate (%).

The brazability was evaluated as follows: the case where the joining rate was 90% or more was ranked as "⊙", the case where the joining rate was 80% or more and less than 90% was ranked as "○", and the case where the joining rate was less than 80% was ranked as "×". The case where the evaluation result was "0" or "o" was determined as pass. The case where the evaluation result was "×" was determined as fail.

**[Table 1]**

| | | Emission intensity ratio Si/Al | Peak emission intensity ratio Si/F | Initial hydrophilicity | Sustainability of hydrophilicity |
|---|---|---|---|---|---|
| | A1 | 7.1×10⁻³ | 2.1×10⁻³ | ⊙⊙ | ○ |
| | A2 | 7.1×10⁻³ | 3.8×10⁻² | ⊙⊙ | ○ |
| | A3 | 2.9×10⁻¹ | 2.1×10⁻³ | ⊙⊙ | ○ |
| | A4 | 2.9×10⁻¹ | 3.8×10⁻² | ⊙⊙ | ○ |
| | A5 | 1.0×10⁻² | 2.1×10⁻³ | ⊙⊙ | ⊙ |
| | A6 | 7.1×10⁻³ | 3.0×10⁻³ | ⊙⊙ | ⊙ |
| | A7 | 1.0×10⁻² | 3.8×10⁻² | ⊙⊙ | ⊙ |
| | A8 | 7.1×10⁻³ | 3.1×10⁻² | ⊙⊙ | ⊙ |
| Examples | A9 | 2.3×10⁻¹ | 2.1×10⁻³ | ⊙⊙ | ⊙ |
| | A10 | 2.9×10⁻¹ | 3.0×10⁻³ | ⊙⊙ | ⊙ |
| | A11 | 2.3×10⁻¹ | 3.8×10⁻² | ⊙⊙ | ⊙ |
| | A12 | 2.9×10⁻¹ | 3.1×10⁻² | ⊙⊙ | ⊙ |
| | A13 | 1.0×10⁻² | 3.×10⁻³ | ⊙⊙ | ⊙⊙ |
| | A14 | 1.0×10⁻² | 3.1×10⁻² | ⊙⊙ | ⊙⊙ |
| | A15 | 2.3×10⁻¹ | 3.0×10⁻³ | ⊙⊙ | ⊙⊙ |
| | A16 | 2.3×10⁻¹ | 3.1×10⁻² | ⊙⊙ | ⊙⊙ |
| Comparative Examples | A17 | 7.1×10⁻³ | No peak | × | × |
| | A18 | 2.9×10⁻¹ | No peak | × | × |
| | A19 | 6.5×10⁻⁻³ | 2.1×10⁻³ | ⊙⊙ | × |
| | A20 | 6.5×10⁻³ | 3.9×10⁻² | ⊙⊙ | × |
| | A21 | 3.2×10⁻¹ | 2.1×10⁻⁻³ | ⊙⊙ | × |
| | A22 | 3.2×10⁻¹ | 3.9×10⁻² | ⊙⊙ | × |
| | A23 | 73×10⁻³ | 1.8×10⁻⁻³ | ⊙⊙ | × |
| | A24 | 7.3×10⁻³ | 4.1×10⁻² | ⊙⊙ | × |
| | A25 | 2.9×10⁻¹ | 1.8×10⁻³ | ⊙⊙ | × |
| | A26 | 2.9×10⁻¹ | 4.1×10⁻² | ⊙⊙ | × |

**[Table 2]**

| | | Emission intensity ratio Si/Al | Peak emission intensity ratio Si/F | Amount of coating (g/m²) | Initial hydrophilicity | Sustainability of hydrophilicity | Brazability |
|---|---|---|---|---|---|---|---|
| Examples | B1 | 1.1×10⁻² | 3.1×10⁻³ | 0.5 | ⊙⊙ | ⊙⊙ | ○ |
| | B2 | 1.1×10⁻² | 3.1×10⁻³ | 1.1 | ⊙⊙ | ⊙⊙ | ⊙ |
| | B3 | 1.1×10⁻² | 3.1×10⁻³ | 4.0 | ⊙⊙ | ⊙⊙ | ⊙ |
| | B4 | 1.1×10⁻² | 3.1×10⁻³ | 9.8 | ⊙⊙ | ⊙⊙ | ○ |
| Comparative Examples | B5 | 1.1×10⁻² | 3.1×10⁻³ | 0.4 | ⊙⊙ | ⊙⊙ | × |
| | B6 | 1.1×10⁻² | 3.1×10⁻³ | 10.5 | ⊙⊙ | ⊙⊙ | × |

The above-mentioned evaluation results are shown in Tables 1 and 2. As shown in Tables 1 and 2, in Examples A1 to A16 and Examples B1 to B4, all of the hydrophilicity, sustainability of hydrophilicity, and brazability were satisfactory (passed). On the other hand, in Comparative Examples A17 to A26 and Comparative Examples B5 and B6, any of the hydrophilicity, sustainability of hydrophilicity, and brazability was unsatisfactory (failed).

From the above-mentioned results of the Examples and Comparative Examples, it has been found that the emission intensity ratio Si/Al of Si to Al falls within the range of 7.0×10⁻³ to 3.0×10⁻¹ and the peak emission intensity ratio Si/F of Si to F falls within the range of 2.0×10⁻³ to 4.0×10⁻², according to glow discharge optical emission spectrometry in the thickness direction of the hydrophilic film, whereby the hydrophilic film is excellent in hydrophilicity and sustainability thereof.

Further, it has been found that, in the heat exchanger fin having the hydrophilic film on its surface, the amount of coating per unit area of the hydrophilic film falls within the range of 0.5 to 10 g/m², whereby the brazability between the aluminum tube and the fin is excellent.

## Claims

1. A hydrophilic film containing at least Si, Al, and F,
wherein an emission intensity ratio Si/Al of Si to Al is 7.0×10⁻³ to 3.0×10⁻¹ and a peak emission intensity ratio Si/F of Si to F is 2.0×10⁻³ to 4.0×10⁻², according to glow discharge optical emission spectrometry in a thickness direction of the hydrophilic film.

2. The hydrophilic film according to claim 1, wherein the hydrophilic film has an amount of coating per unit area of 0.5 to 10 g/m².

3. A heat exchanger fin comprising:
an aluminum base material made of aluminum or an aluminum alloy; and
a hydrophilic film formed on a surface of the aluminum base material,
wherein the hydrophilic film is a hydrophilic film containing at least Si, Al, and F, and
wherein an emission intensity ratio Si/Al of Si to A1 is 7.0×10⁻³ to 3.0×10⁻¹ and a peak emission intensity ratio Si/F of Si to F is 2.0×10⁻⁻³ to 4.0×10⁻², according to glow discharge optical emission spectrometry in a thickness direction of the hydrophilic film.

4. The heat exchanger fin according to claim 3, wherein the hydrophilic film has an amount of coating per unit area of 0.5 to 10 g/m².

5. A heat exchanger comprising:
at least one flow pipe having at least one flow passage formed in the at least one flow pipe; and
at least one heat exchanger fin joined to the at least one flow pipe,
wherein the at least one heat exchanger fin comprises:
an aluminum base material made of aluminum or an aluminum alloy; and
a hydrophilic film formed on a surface of the aluminum base material,
wherein the hydrophilic film is a hydrophilic film containing at least Si, Al, and F, and
wherein an emission intensity ratio Si/Al of Si to Al is 7.0×10⁻³ to 3.0×10⁻¹ and a peak emission intensity ratio Si/F of Si to F is 2.0×10⁻³ to 4.0×10⁻², according to glow discharge optical emission spectrometry in a thickness direction of the hydrophilic film.

6. The heat exchanger according to claim 5, wherein the hydrophilic film has an amount of coating per unit area of 0.5 to 10 g/m².
